# EUROPÄISCHE PATENTANMELDUNG

(11) **EP 1 084 891 A2**
(43) Veröffentlichungstag der Anmeldung: **21.03.2001**
(21) Anmeldenummer: 00117073.7
(22) Anmeldetag: 09.08.2000
(51) Int. Cl.: B60K 35/00

(54) **Kombinationsinstrument für Kraftfahrzeuge mit farbvariabler Anzeige**

(30) Priorität: 13.09.1999 DE 19943569
(71) Anmelder: Mannesmann VDO Aktiengesellschaft, 60388 Frankfurt am Main (DE)
(72) Erfinder: Abel, Heinz-Bernhard, Dr., 63762 Grossostheim (DE); Noll, Heinrich, Dr., 64823 Gross-Umstadt (DE)
(74) Vertreter: Rassler, Andrea, Dipl.-Phys.

(57) **Zusammenfassung**

Bei einem Kombinationsinstrument für Kraftfahrzeuge mit farbvariabler Anzeige, mit dem mindestens zwei verschiedene Meßgrößen und/oder Betriebszustände des Kraftfahrzeugs analog und/oder digital darstellbar sind, ist vorgesehen, daß beim Über- oder Unterschreiten einer Meßgröße oder beim Eintreten eines bestimmten Betriebszustandes des Kraftfahrzeugs die Darstellungsfarben und/oder Darstellungshelligkeit von mehr als einem angezeigten Meßwert und/oder einem angezeigten Betriebszustand verändert werden.

## Beschreibung

Die Erfindung betrifft ein Kombinationsinstrument für Kraftfahrzeuge mit farbvariabler Anzeige. Aus den Stand der Technik ist es bekannt, bei der Darstellung von Meßwerten in bestimmten Meßbereichen die Farbe der Darstellung der Meßwerte zu verändern. So ist es beispielsweise bekannt, bei beleuchtbaren Zeigern von Analoganzeigen, die Farbe der Zeigerbeleuchtung in Abhängigkeit des darzustellenden Meßwertes zu verändern. Weiterhin ist es bekannt, mittels farbiger Flüssigkristalldisplays analoge und/oder digitale Anzeigen nachzubilden. Hierbei sind die Darstellungsfarben der Anzeige durch den Benutzer des Kraftfahrzeuges nach seinen Wünschen einstellbar.

Insbesondere bei Tag ist ein Farbwechsel eines beleuchteten Zeigers oder einer Farb-LC-Anzeige bei Konzentration des Fahrers auf die Verkehrssituation schlecht wahrnehmbar, wenn der Fahrer nicht fortlaufend die vorhandenen oder auf der LC-Anzeige dargestellten Geräte überwacht. Durch eine fortlaufende Überwachung würde der Fahrer aber übermaßen vom Verkehrsgeschehen abgelenkt. Oder aber der Fahrer erkennt eine wichtige Information nicht oder zu spät.

Aufgabe der Erfindung ist es daher, die Wahrnehmbarkeit von Veränderungen von farbvariablen Anzeigen zu verbessern, insbesondere beim Eintreten von für den Betrieb des Fahrzeug kritischen Betriebszuständen.

Diese Aufgabe wird erfindungsgemäß dadurch gelöst, daß beim Über- oder Unterschreiten eines Wertes einer Meßgröße und/oder beim Eintreten eines bestimmten Betriebszustandes des Kraftfahrzeugs die Anzeigefarbe und/oder Anzeigehelligkeit von mehr als einem Meßwert verändert wird. Diese Veränderung kann vom Fahrer besser wahrgenommen werden.

Besonders vorteilhaft ist es, die Farbdarstellung der gesamten Anzeige zu verändern, da dies dem Fahrer auch nur bei flüchtiger Beachtung des Kombinationsinstruments auffällt und so die Aufmerksamkeit des Fahrers für die Anzeige geweckt wird.

Durch eine Einstellbarkeit der Farben und/oder Helligkeit der Anzeige kann der Fahrer die Anzeige seinem Geschmack und seinen körperlichen Fähigkeiten entsprechend anpassen.

Der betreffende Wert ist besonders einfach für den Fahrer wahrnehmbar, wenn die entsprechende Anzeige oder Anteile der Anzeige entweder blinkt, ständig die Farbe wechselt oder in einer sonst auf der Anzeige nicht vorhandenen Farbe dargestellt wird.

Bei einer farbvariablen Anzeige sind auch Tempomatmarken einfach darstellbar. Sofern dem Fahrzeug über telematische Systeme auch nicht erlaubte Geschwindigkeitsbereiche für die gerade befahrene Straße übermittelt werden, ist der Fahrer durch die farbliche Hervorhebung dieser Bereiche auf einer Geschwindigkeitsanzeige immer über die erlaubte Geschwindigkeit informiert.

Durch eine Kombination mit einem Tempomat kann der Tempomat dann vorteilhafterweise nicht auf einen verbotenen Geschwindigkeitswert eingestellt werden.

Durch eine Anpassung der Helligkeit einer dargestellten Farbe entsprechend ihrer Wahrnehmbarkeit für das menschliche Auge kann eine gleichmäßig helle Anzeige erreicht werden, wenn beispielsweise Helligkeitsänderungen nur für bestimmte Warnhinweise verwendet werden sollen.

Eine Änderung von Farben ist besonders einfach durch ein oder mehrere Farbdisplays zu realisieren. Besonders platzsparend läßt sich ein Farbdisplay als Flüssigkristallanzeige (LC-Anzeige) realisieren.

Bei einer Anzeige mit mindestens einer analogen Anzeige mit Meßwerk, Zeiger und Zifferblatt kann die Farbänderung von Zeiger und/oder Zifferblatt durch eine Änderung der Beleuchtungsfarbe herbeigeführt werden. Hierbei ist der Zeiger besonders einfach beleuchtbar, wenn er und seine Zeigerwelle aus lichtleitendem Material hergestellt sind und das farbvariable Licht am dem Zeiger entgegengesetzten Ende der Zeigerwelle in die Zeigerwelle eingekoppelt wird.

Wenn das Zifferblatt bei einer analogen Anzeige mit Meßwerk und Zeiger durch eine Farb-LC-Anzeige ausgeführt ist, kann diese Anzeige entweder für die Anzeige desselben Meßwertes in verschiedenen Einheiten (beispielsweise Kilometer pro Stunde oder Meilen pro Stunde) oder verschiedener Meßwerte benutzt werden, wenn das Meßwerk dann entsprechend angesteuert wird.

Die Erfindung wird nachfolgend anhand der Figuren näher erläutert. Es zeigen:
- Figur 1: eine LC-Anzeige mit der Darstellung mehrerer Anzeigen
- Figur 2: die LC-Anzeige aus Figur 1 mit einer geänderten Darstellung von Anzeigen
- Figur 3: den Schnitt durch eine Analoganzeige mit Meßwerk und Zeiger

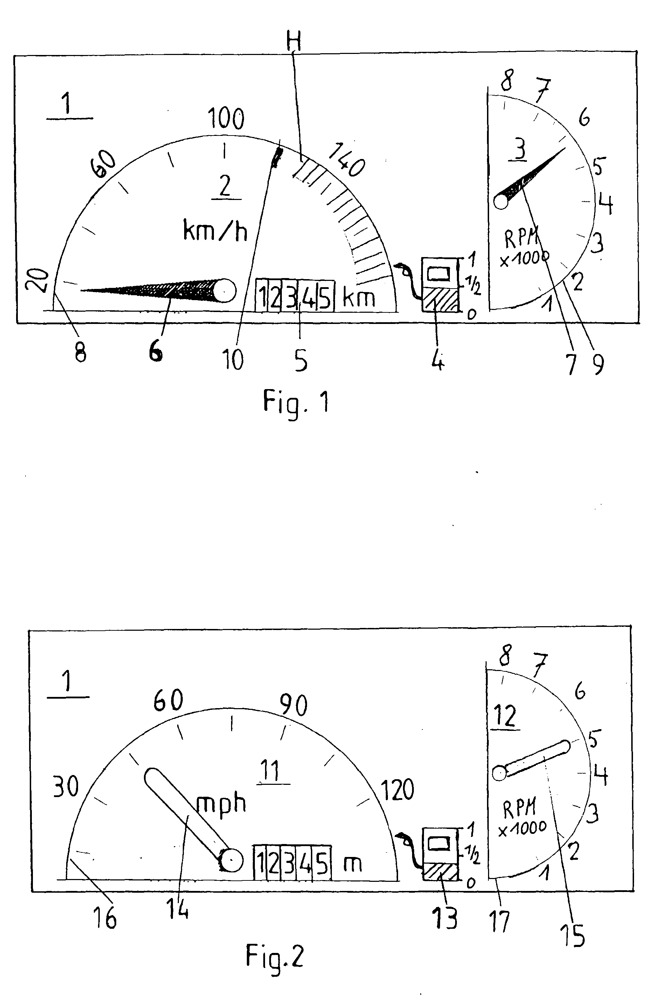

In Figur 1 stellt eine Farb-LC-Anzeige 1 analoge Anzeigen 2, 3, 4 und eine digitale Anzeige 5 dar. Die analoge Anzeige 2 stellt ein Tachometer zur Anzeige von dem Kraftfahrzeug gefahrenen Geschwindigkeiten in Kilometer pro Stunde dar, die analoge Anzeige 3 die Motordrehzahl des Kraftfahrzeugs, die analoge Anzeige 4, den Inhalt des Treibstofftanks des Kraftfahrzeugs und die digitale Anzeige 5, die von dem Kraftfahrzeug zurückgelegte Entfernung in Kilometern. Die analogen Anzeigen 2, 3 weisen jeweils einen mittels des LC-Displays dargestellten Zeiger 6, 7 und Zifferblätter 8, 9 auf. In der analogen Anzeige 2 ist eine Tempomatmarke 10 gesetzt. Weiterhin erkennt der Kraftfahrer durch eine Veränderung der Zifferblattfarbe ab dem Bereich H die auf dem gerade befahrenen Streckenabschnitt gerade erlaubte Höchstgeschwindigkeit. Wenn der Kraftfahrer den Tempomat ausschaltet und die erlaubte Höchstgeschwindigkeit auf dem gerade befahrenen Streckenabschnitt überschreitet, ändert sich beispielsweise die Darstellungsfarbe des Zeigers 6 von weiß oder grün in rot. Gleichzeitig wird die Farbe der Zifferblätter 8, 9 geändert. So wird die Aufmerksamkeit des Fahrers geweckt und er erkennt beim Blick auf den Tachometer 2 durch die geänderte Farbe des Zeigers 6, daß er zu schnell ist.

Beim Unterschreiten einer bestimmten Kraftstoffmenge im Tank kann beispielsweise die Anzeige 4 andauernd ihre Farbe wechseln und gleichzeitig die Farbe der Zifferblätter 8 und/oder 9 geändert werden.

In Figur 2 sind ebenfalls auf dem LC-Display 1 drei analogen Anzeigen 11, 12, 13 dargestellt. Die Anzeigen 11, 12 weisen Zeiger 14, 15 und Zifferblätter 16, 17 auf. Die Anzeige 11 stellt einen Tachometer und die Anzeige 12 einen Drehzahlmesser dar. Die Geschwindigkeit des Kraftfahrzeugs wird bei dem Tachometer 11 in Meilen pro Stunde dargestellt. Weiterhin wurde von dem Kraftfahrer die Darstellungsform der Zeiger 14, 15 gegenüber den Zeigern 6, 7 geändert.

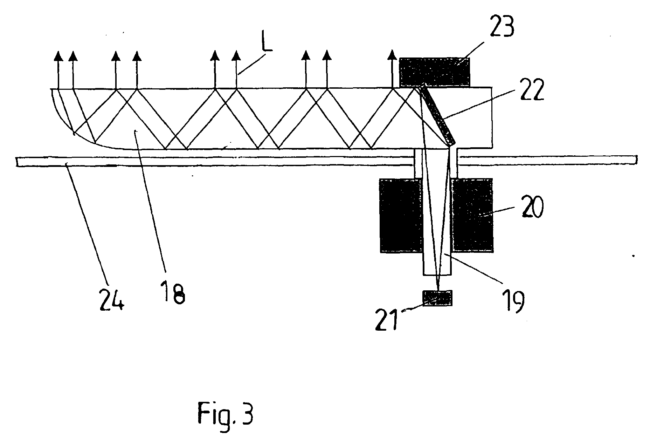

In Figur 3 erkennt man einen Zeiger 18, der mittels einer Zeigerwelle 19 mittels eines Meßwerks 20 um die Achse der Zeigerwelle 19 drehbar gelagert ist. Der Zeiger 18 und die Zeigerwelle 19 sind aus einem nichtleitenden Material hergestellt, so daß von einer farbvariablen Lichtquelle 21 Licht in die Zeigerwelle 19 eingekoppelt werden kann und über einen Umlenkspiegel 22 in den Zeiger 18 gelangt, der Lichtstrahlen dann aussendet, wie durch Lichtstrahlen L dargestellt. Eine Zeigerkappe 23 verbessert den ästhetischen Eindruck auf den Betrachter. Der Zeiger 18 bewegt sich über ein Zifferblatt 24, das entweder durch ein in herkömmlicher Weise bedrucktes Zifferblatt realisiert ist, das durch verschiedenfarbige Beleuchtung und/oder Durchleuchtung in verschieden Farben erstrahlen kann. Das Zifferblatt 24 kann aber auch als Farb-LC-Anzeige ausgestaltet sein. Dann kann der Fahrer frei wählen, welcher Meßwert mit dem Zeiger 18 angezeigt werden soll. Das Meßwerk 20 muß dann entsprechend angesteuert werden und die LC-Anzeige 24 das entsprechende Zifferblatt darstellen. Auch hier kann der Fahrer dann noch die Farbe des Zifferblatts und des Zeigers und die Größe und Form der auf dem Zifferblatt dargestellten Zahlen und Buchstaben auswählen.

## Patentansprüche

1. Kombinationsinstrument für Kraftfahrzeuge mit farbvariabler Anzeige, mit dem mindestens zwei verschiedene Meßgrößen und/oder Betriebszustände des Kraftfahrzeugs analog und/oder digital darstellbar sind, **dadurch gekennzeichnet** daß beim Über- oder Unterschreiten einer Meßgröße oder beim Eintreten eines bestimmten Betriebszustandes des Kraftfahrzeugs die Darstellungsfarben und/oder Darstellungshelligkeit von mehr als einem angezeigten Meßwert und/oder einem angezeigten Betriebszustand verändert werden.

2. Kombinationsinstrument nach Anspruch 1, **dadurch gekennzeichnet,** daß beim Über- oder Unterschreiten des Werts einer Meßgröße oder beim Eintreten eines bestimmten Betriebszustands des Kraftfahrzeugs die Darstellungsfarben und/oder Darstellungshelligkeit des gesamten Kombinationsinstrumentes verändert werden.

3. Kombinationsinstrument nach Anspruch 1 oder 2, **dadurch gekennzeichnet,** daß die Grundfarben von Zifferblättern und Zeigern von dem Fahrer einstellbar sind.

4. Kombinationsinstrument nach Anspruch 2 oder 3, **dadurch gekennzeichnet,** daß Farbübergänge bei sich ändernden anzuzeigenden Meßwerten frei einstellbar sind.

5. Kombinationsanzeigeinstrument nach einem der vorstehenden Ansprüche, **dadurch gekennzeichnet,** daß die Meßgrößen, deren Wert der über- oder unterschritten wurde oder der bestimmte Betriebszustand des Kraftfahrzeugs durch eine ständig sich ändernde Farbe und/oder verändernde Helligkeit dargestellt wird.

6. Kombinationsinstrument nach einem der vorstehenden Ansprüche, **dadurch gekennzeichnet,** daß Tempomatmarken auf einer Geschwindigkeitsanzeige darstellbar sind.

7. Kombinationsinstrument nach einem der vorstehenden Ansprüche, **dadurch gekennzeichnet,** daß bei einer Geschwindigkeitsanzeige ein nicht erlaubter Geschwindigkeitsbereich farblich hervorgehoben darstellbar ist.

8. Kombinationsinstrument nach Anspruch 6 und 7, **dadurch gekennzeichnet,** daß die Tempomatmarke (10) nicht in einen unerlaubten Geschwindigkeitsbereich gesetzt werden kann.

9. Kombinationsinstrument nach einem der vorstehenden Ansprüche, **dadurch gekennzeichnet,** daß bei einer Farbänderung die Helligkeit der geänderten Farbe in Abhängigkeit der Wahrnehmbarkeit angepasst wird.

10. Kombinationsinstrument nach einem der vorstehenden Ansprüche, **dadurch gekennzeichnet,** daß es ein oder mehrere Farbdisplays zur Darstellung der digitalen Werte, Symbole und/oder analogen Anzeigeinstrumente aufweist.

11. Kombinationsinstrument nach Anspruch 10, **dadurch gekennzeichnet,** daß ein oder mehrere Farbdisplays als Farb-LC-Anzeigen ausgestaltet sind.

12. Kombinationsinstrument nach einem der vorstehenden Ansprüche, dadurch **gekennzeichnet,** daß es mindestens ein analoges Anzeigeinstrument mit Meßwerk (20), Zeiger (18) und Zifferblatt (24) aufweist, daß der Zeiger und das Zifferblatt (24) verschiedenfarbig beleuchtbar sind.

13. Kombinationsinstrument nach Anspruch 12, **dadurch gekennzeichnet,** daß das Zifferblatt (24) als Farb-LC-Anzeige ausgestaltet ist.

14. Kombinationsinstrument nach Anspruch 13, **dadurch gekennzeichnet,** daß unterschiedliche Zifferblätter vom Fahrer auswählbar sind.

15. Kombinationsinstrument nach einem der Ansprüche 12 bis 14, **dadurch gekennzeichnet,** daß der Zeiger (18) mit einer farbvariablen Lichtquelle (21) beleuchtbar ist, die ihr Licht durch eine lichtleitende Zeigerwelle (19) in den Zeiger (18) einkoppelt.
